(19) Europäisches Patentamt
European Patent Office
Office européen des brevets

(11) **EP 3 484 975 B1**

(12) **EUROPÄISCHE PATENTSCHRIFT**

(45) Veröffentlichungstag und Bekanntmachung des Hinweises auf die Patenterteilung:
**13.05.2020  Patentblatt 2020/20**

(21) Anmeldenummer: **17752277.8**

(22) Anmeldetag: **12.07.2017**

(51) Int Cl.:
*C09K 3/14* *(2006.01)*        *B28B 1/00* *(2006.01)*
*B33Y 80/00* *(2015.01)*       *B29C 64/10* *(2017.01)*
*B24D 3/34* *(2006.01)*

(86) Internationale Anmeldenummer:
**PCT/DE2017/100576**

(87) Internationale Veröffentlichungsnummer:
**WO 2018/010730 (18.01.2018 Gazette 2018/03)**

(54) **VERFAHREN ZUM HERSTELLEN EINES SCHLEIFKORNS UND SCHLEIFKORN**

METHOD FOR PRODUCING AN ABRASIVE PARTICLE, AND ABRASIVE PARTICLE

PROCÉDÉ DE FABRICATION D'UN GRAIN ABRASIF ET GRAIN ABRASIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2016   DE 102016113125**

(43) Veröffentlichungstag der Anmeldung:
**22.05.2019   Patentblatt 2019/21**

(73) Patentinhaber: **VSM. Vereinigte Schmirgel- Und Maschinen-Fabriken AG**
**30165 Hannover (DE)**

(72) Erfinder:
• **JÄGER, Achim**
**30179 Hannover (DE)**
• **ABEL, Thorsten**
**30519 Hannover (DE)**

(74) Vertreter: **Bremer, Ulrich**
**Advopat**
**Patent- und Rechtsanwälte**
**Theaterstraße 6**
**30159 Hannover (DE)**

(56) Entgegenhaltungen:
EP-A1- 2 251 185          EP-A1- 2 692 817
EP-A1- 2 692 818          EP-B1- 0 651 778
WO-A1-2015/048768      WO-A2-2011/139562
US-A- 4 752 498          US-A1- 2011 146 509
US-A1- 2013 125 477

**Beschreibung**

Die Erfindung betrifft ein Schleifkorn auf Alumina-Basis.

Keramische Schleifkörner auf Alumina-Basis werden vielfältig in Schleifmitteln wie Schleifbändern und Schleifscheiben eingesetzt. Die Schleifkörner sind polykristallin aus $\alpha$-Alumina, im Allgemeinen mit Zusätzen, ausgebildet.

Zur Herstellung der Schleifkörner sind Sol-Gel-Prozesse bekannt, bei denen ein Alumina-Ausgangsmaterial, zum Beispiel Boehmit, als wässrige Dispersion nanokristalliner Teile oder als Lösung ausgebildet wird, nachfolgend das Sol durch Zugabe von Geliermittel wie unter anderem Salpetersäure geliert wird, und das Gel nachfolgend durch eine Wärmebehandlung zu $\alpha$-Alumina umgewandelt wird.

Hierbei kann das Gel als eine Schicht auf einer Unterlage aufgetragen werden, wobei die Schicht nachfolgend getrocknet, kalziniert und gebrannt wird, sodass eine gebrannte Platte nachfolgend gebrochen und klassiert werden kann.

Weiterhin sind Verfahren unter Formung des Gel-Materials bekannt. Die WO 2001/139562 A2 beschreibt ein Verfahren, bei dem das Gel in Formen gefüllt wird, um tetraedrische Formkörper oder Grünlinge auszuformen, die dann nachfolgend der Temperaturbehandlung unterworfen werden. Die EP 651778 B1 zeigt die Herstellung derartiger Schleifkörner mit dreieckiger Grundfläche und planparallelen Flächen.

Komplexe Formgebungen der Schleifkörner sind jedoch im Allgemeinen aufwendig. Auch ist zum Beispiel das Abfüllen des Gels in Formvertiefungen auf einem Träger, und das Lösen nach dem Brennen aufwendig.

Die EP 2 251 185 A1 beschreibt ein Verfahren zur generativen Herstellung eines Formkörpers als Grünling für eine Dentalrestauration, wobei aus unter Einwirkung von elektromagnetischer Strahlung verfestigbarem Material mittels einer Mehrzahl von Belichtungsschritten jeweils schichtweise Material aufgetragen und verfestigt wird.

In EP 2 692 818 A1 ist ein Schleifkorn mit mindestens zwei Hauptoberflächen und mindestens einer Nebenoberfläche, welche über eine erste Kante mit einer ersten Hauptoberfläche verbunden ist, beschrieben. Über eine zweite Kante ist die Nebenoberfläche mit einer zweiten Hauptoberfläche verbunden, die mit der ersten Hauptoberfläche keine gemeinsame Kante aufweist. Hierbei schließt die Nebenoberfläche im Bereich der ersten und zweiten Kante jeweils einen stumpfen Winkel mit der ersten und zweiten Hauptoberfläche ein. Das Schleifkorn kann insbesondere ein polykristallines $\alpha$-Al2O3 Schleifkorn sein.

Die WO 2011/139562 A2 beschreibt einen Schleifartikel mit keramischen geformten Schleifpartikeln, die in einem Binder aufgenommen sind. Hierbei haben die keramischen geformten Schleifpartikel vier größere Seiten, die über sechs gemeinsame Kanten miteinander verbunden sind, wobei jede der größeren Seiten drei andere der vier größeren Seiten berührt, und wobei die sechs gemeinsamen Kanten im Wesentlichen die gleiche Länge aufweisen. Hierbei ist auch vorgesehen, dass alle vier größeren Seiten konkav ausgebildet sind. Die keramischen geformten Partikel können insbesondere tetrahedrale Symmetrie aufweisen oder als reguläre Tetraeder ausgebildet sein. Sie können insbesondere aus einem durch ein Sol-Gel-Verfahren ausgebildet Alumina-Material ausgebildet werden, insbesondere $\alpha$-Alumina.

EP 2 692 817 A1 beschreibt ein Schleifkorn mit unter einem Winkel angeordneten Platten. Das Schleifkorn weist hierbei mindestens drei Platten auf, wobei jede der mindestens drei Platten unter einem Winkel zu zumindest zwei der mindestens drei Platten angeordnet ist. Das Schleifkorn ist insbesondere polykristallines $\alpha$-Al2O3. Die US 2013/125477 A1 beschreibt Schleifpartikel aus einem keramischen Material, wobei die Partikel jeweils eine erste Platte aufweist, die integral verbunden mit einer zweiten Platte ist, wobei die beiden Platten unter einem Winkel stehen.

Der Erfindung liegt die Aufgabe zugrunde, ein keramisches Schleifkorn zu schaffen, das eine sichere Herstellung und gute Schleifeigenschaften ermöglicht.

Diese Aufgabe wird durch ein Schleifkorn nach Anspruch 1 gelöst. Die Unteransprüche beschreiben bevorzugte Weiterbildungen. Hierbei ist weiterhin ein Schleifartikel mit den Schleifkörnern vorgesehen.

Das Schleifkorn kann insbesondere durch ein erfindungsgemäßes Verfahren hergestellt werden, bei dem

auf einer Unterlage Formkörper mit jeweils sechs sich schneidenden und/oder überlappenden, im Wesentlichen gleichen Volumenkörpern ausgebildet werden, insbesondere mit im Wesentlichen einer äußeren dreizähligen Form der Formkörper.

Hierbei können die Formkörper alternierend auf einer Basisfläche stehend und einer Spitzenfläche stehend ausgebildet werden.

Das Schleifkorn kann insbesondere durch ein erfindungsgemäßes Verfahren hergestellt werden, bei dem nach dem optischen Binden nicht gebundenes Gel ausgewaschen oder abgetragen wird, und nachfolgend beim Erhitzen der Formkörper der optische Binder entfernt wird, z. B. durch Oxidation und/oder Verdampfen.

Bei dem erfindungsgemäßen Verfahren werden die Formkörper bzw. Grünlinge somit durch additives Auftragen ausgebildet. Sie können insbesondere ausgebildet werden, indem dem Sol oder Gel ein optischer Binder beigefügt wird, das Gelmaterial sukzessive und schichtweise aufgetragen und mittels eines optischen Binders verfestigt wird, der bei elektromagnetischer Strahlung einer spezifischen Frequenz aushärtet. In den aufgetragenen Gel-schichten kann somit elektromagnetische Strahlung derartig fokussiert werden, dass Bereiche lokal ausgehärtet werden, so dass die Formkörper bzw. Grünlinge Schicht für Schicht ausgebildet werden.

Derartige Verfahren zur Herstellung von Formkörpern sind auch als "3D-Drucken" bekannt, da eine Fläche sukzessive aufgetragen wird und ein Formkörper durch Aushärten oder Auftragen vom Material an vorgegebenen Stellen ausgebildet wird. Somit werden die Formkörper bzw. Grünlinge der Schleifkörner durch 3D-Drucken aus dem Gelmaterial ausgebildet.

Bei Einsetzen eines optisch aushärtenden Binders härtet somit zunächst der Binder und sichert die Formgebungen der Formkörper, sodass zum Beispiel überflüssiges Gelmaterial nachfolgend ausgewaschen werden kann. Bei der nachfolgenden Temperaturbehandlung, d.h. in an sich bekannter Weise wie Kalzinieren und Sintern des Gel-Materials der Formkörper, verdampft oder oxidiert der Binder.

Der Vorgang der additiven Auftragung mit optischer Härtung kann grundsätzlich entsprechend der EP 2 251 185 A1 erfolgen, es können jedoch auch andere 3D-Druck-Verfahren angesetzt werden, insbesondere mit anderen Schichtdicken und Eindringtiefen der optischen Strahlung.

Erfindungsgemäß kann die optische Aushärtung des Binders auch bereits ganz oder teilweise zum Trocknen des Formkörpers führen, so dass gegebenenfalls nur eine kurze weitere Trocknung erforderlich ist, oder bereits anschließend das Kalzinieren erfolgen kann.

Erfindungsgemäß wird insbesondere der Vorteil erreicht, dass grundsätzlich komplexe und anspruchsvolle Formgebungen von Schleifkörnern möglich sind.

Hierbei können viele Schleifkörner platzsparend nebeneinander ausgebildet werden, wobei zum Beispiel alternierend Positionen auf einem Seitenbereich (Basisfläche) und einer Spitzenfläche ausgebildet werden, sodass die Schleifkörner dicht aneinander gepackt werden können, mit kleinen Zwischenräumen.

Das erfindungsgemäße Schleifkorn weist sechs im Wesentlichen planparallele Volumenkörper auf, die jeweils zwei im Wesentlichen zueinander parallele dreieckige Wände und eine Stegfläche aufweisen. Hierbei können die Volumenkörper insbesondere als planparalle, dreieckige, Stege oder Plättchen mit jeweils einer Stegfläche ausgebildet sein.

Die dreieckigen Wände weisen zwei sich in einem mittleren Bereich des Schleifkorns treffende, gleich lange Katheten und eine längere Hypotenuse auf, d.h. die Hypotenuse ist länger als die Katheten.

Gemäß einer bevorzugten Ausbildung ist das Schleifkorn ausschließlich aus diesen sechs Volumenkörpern bzw. Stegen oder Plättchen gebildet, die sich in dem mittleren Bereich überlappen bzw. ineinander übergehen.

Vorzugsweise sind die Spitzen abgeflacht, so dass Spitzenflächen, z. B. plane, dreieckige, gleichschenklige Spitzenflächen, ausgebildet sind. Somit weist ein derartiges Schleifkorn vorzugsweise lediglich drei Arten von Kanten auf, nämlich zwölf gleich lange Katheten, zwölf gleich lange Hypotenusen und zwölf gleich lange Schenkel der Spitzenflächen, wobei die Länge der Schenkel die Wanddicke (Plättchendicke) wiedergeben; es werden vorzugsweise sechs rechteckige Stegflächen und vier dreieckige Spitzenflächen, die zusammen die Außenflächen bilden, und weiterhin zwölf dreieckige Stegwände ausgebildet.

Die Außenform des Schleifkorns wird somit vorzugsweise durch die Stegflächen und die Spitzenflächen bestimmt. Die Stegwände definieren Vertiefungen und erstrecken sich zur Mitte hin.

Somit wird eine Form gebildet, bei der die Berührungspunkte sämtlicher Katheten der Stege sich in etwa im Massenschwerpunkt des Schleifkorns treffen.

Ein derartiges Schleifkorn fällt beim Aufbringen auf einen Träger somit jeweils auf einen Seitenbereich, so dass eine Spitze, vorzugsweise mit abgeflachter Spitzenfläche, nach oben ragt. Die selbstausrichtende, stabilisierende und symmetrische Form stützt das Schleifkorn gegenüber seitlichen Belastungen bzw. Kippmomenten in jeder Richtung.

Beim Schleifvorgang wird zunächst die Spitzenfläche abgetragen, woraufhin nachfolgend sukzessive die dreieckigen Stegwände abgetragen werden.

Es zeigt sich, dass Schleifkörner mit derartigen Stegwänden eine gute Schleifleistung bringen; die Abrasivwirkung bzw. der Schleif-Abtrag ist gleichmäßig, insbesondere auch gleichmäßig bei Eintrag der Schleif-Reaktionskräfte aus verschiedenen Richtungen.

Die gegenüber den Stegflächen zum Mittelpunkt hin vertiefte Form der Seitenflächen ermöglicht eine formschlüssige Einbindung der Schleifkörner in das als Vergussmasse eingesetzte Bindermaterial. Somit können die Schleifkörner mit einem Seitenbereich auf dem Trägermaterial, zum Beispiel einem Gewebe, deponiert werden; da sie jeweils auf eine der durch drei Hypotenusen begrenzten Seitenbereiche fallen, ist eine aufwendige Ausrichtung, zum Beispiel mittels elektrostatischer Aufladung usw., grundsätzlich nicht erforderlich. Die Schleifkörner können sodann in ein Bindermaterial aufgenommen werden, das formschlüssig in die Vertiefungen der Seitenbereiche eingreift und somit die Schleifkörner sicher hält.

Ein Wanddicken-Verhältnis ist definiert als das Verhältnis der Wanddicke zur Länge der Hypotenuse; es bestimmt die Stabilität und Gesamthöhe des Schleifkorns. Hierbei erhöht sich mit steigendem Wanddicken-Verhältnis die Stabilität gegenüber seitlichen Belastungen und Kipp-Momenten, die während eines Schleifvorganges auftreten; hingegen nimmt die Gesamthöhe bzw. Gesamthöhe pro Masse des Schleifkorns, die für die Abtragsleistung und auch für die maximale mögliche Flächendichte und somit Körnung relevant ist, mit steigendem Wanddicken-Verhältnis ab. Es zeigt sich hierbei, dass ein Wanddicken-Verhältnis im Bereich von 0,05 bis 0,5 vorteilhaft ist.

Die Erfindung wird im Folgenden anhand der beiliegenden Zeichnungen an einigen Ausführungsformen erläutert. Es zeigen:

Fig. 1-4      schematisierte Darstellungen der geometrischen Ausbildungen eines Schleifkorns gemäß einer Ausführungsform der Erfindung, in verschiedenen perspektivischen Ansichten;

Fig. 5      eine Aufsicht auf ein Schleifkorn entsprechend Figur 1-4 mit sich verbreiternden Stegen;

Fig. 6, 7      Durchsichten eines Schleifkorns gemäß einer Ausführungsform der Erfindung in verschiedenen perspektivischen Ansichten;

Fig. 8      eine perspektivische Ansicht eines Schleifkorns gemäß einer Ausführungsform der Erfindung;

Fig. 9      eine Aufsicht auf das Schleifkorn aus Figur 8;

Fig. 10-12      weitere perspektivische Ansichten des Schleifkorn aus Fig. 8, 9;

Fig. 13      einen Schleifartikel mit einer Vielzahl von Schleifkörnern;

Fig. 14      eine Detailvergrößerung aus Fig. 13 mit der Einbindung eines Schleifkorns auf dem Schleifartikel;

Fig. 15      ein Flussdiagramm eines Verfahrens zum Herstellen der Schleifkörner gemäß einer Ausführungsform der Erfindung.

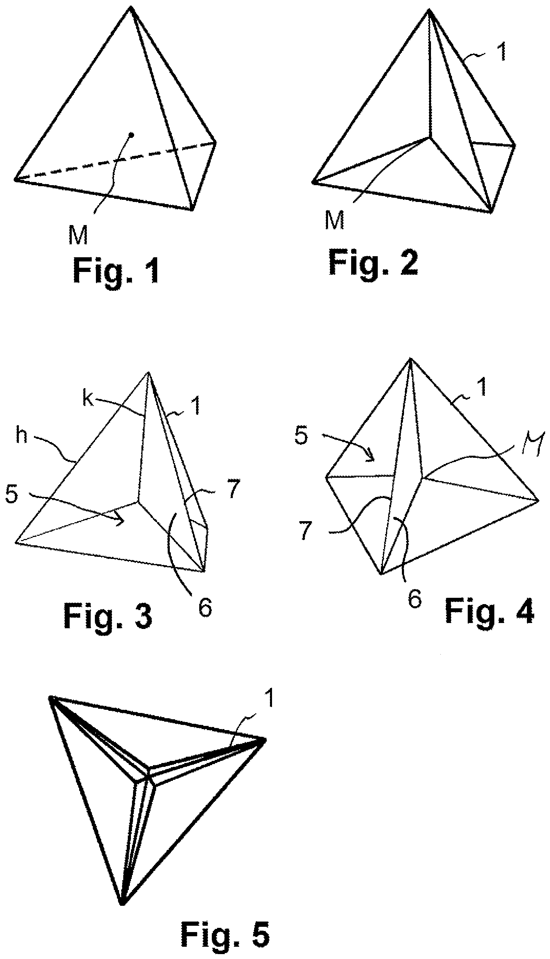

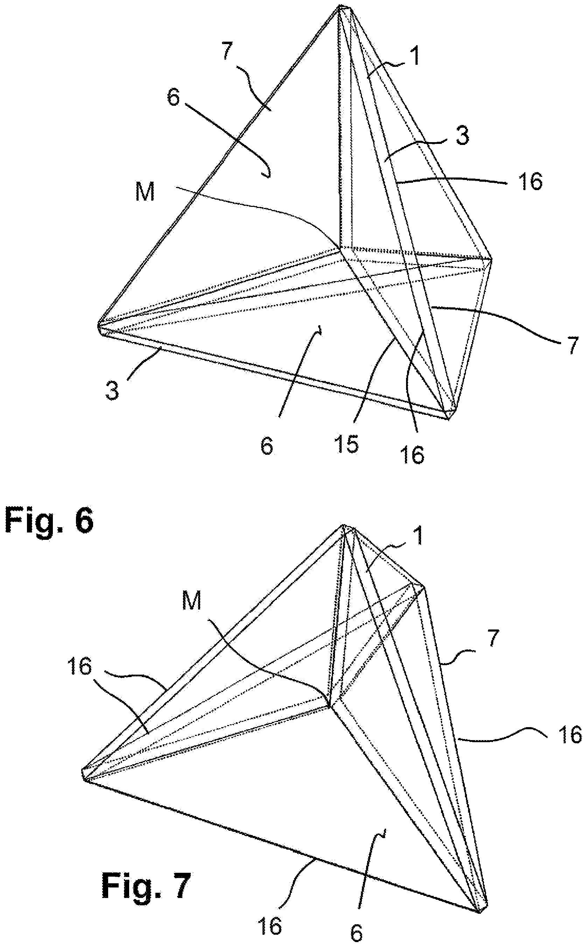

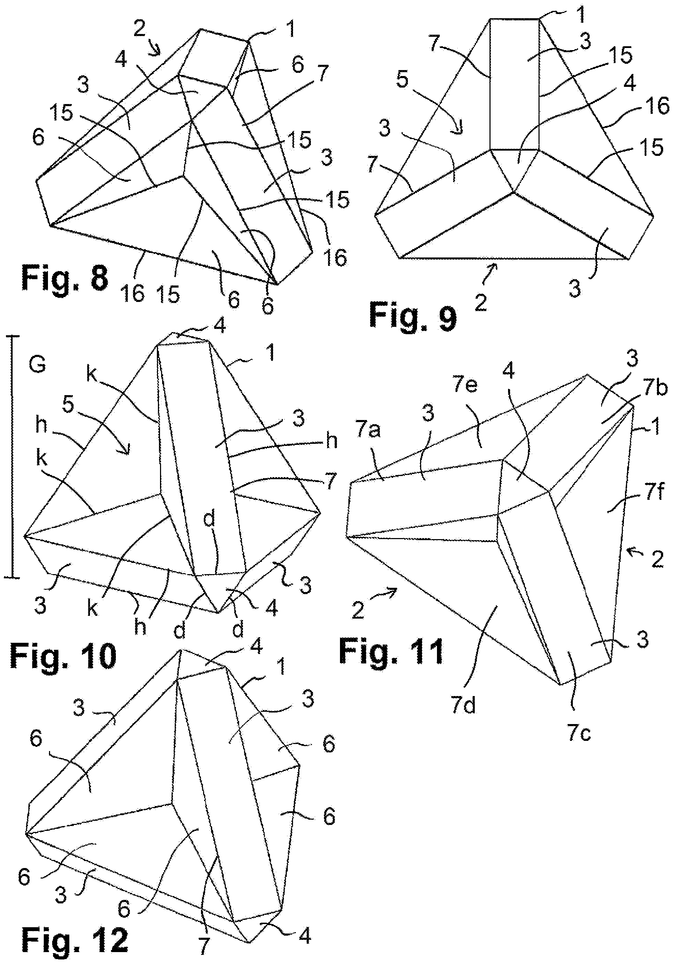

Ein Schleifkorn 1 auf $\alpha$-Alumina (Aluminiumoxid, Al2O3)-Basis ist in der Ausführungsform der Fig. 6, 7 sowie der Ausführungsform der Fig. 8 bis 12 detaillierter gezeigt und durch sechs identische Stege 7 (Volumenkörper) gebildet, die zu einem mittleren Bereich bzw. idealisiert in Fig. 1 gezeigten Mittelpunkt M hin aufeinander zu laufen. Die Stege 7 sind jeweils planparallel mit zwei parallelen, dreieckigen Stegwänden 6 und einer die Stegwände 6 verbindenden Stegfläche 3. Die Stegfläche 3 steht somit jeweils senkrecht auf den beiden Stegwänden 6. Jeweils drei Stegflächen 3 treffen sich in einer Spitzenfläche 4, die somit ein gleichschenkliges Dreieck bildet, mit der Schenkellänge entsprechend der Wanddicke d der Stege 7 (siehe insbesondere die Angaben der geometrischen Strecken bzw. Längen in Fig. 10). Die Stegwände 6 bilden jeweils ein gleichschenkliges Dreieck mit zwei von einer Spitzenfläche 4 nach innen verlaufenden Katheten 15 der Kathetenlänge k und einer zwei Spitzenflächen 4 verbindenden Hypotenuse 16 der Hypotenusenlänge h, wobei h> k.

Zur Veranschaulichung sind in Fig. 11 die sechs Stege als erster Steg 7a, zweiter Steg 7b, dritter Steg 7c, vierter Steg 7d, fünfter Steg 7e und sechster Steg 7f bezeichnet. Die sechs Stege 7a bis 7f treffen sich zur Mitte hin in Übergangsbereichen, die sich nach außen zu den Spitzenflächen 4 erstrecken, bzw. diese Übergangsbereiche stellen Überlappungen der sich nach innen erstreckenden Stege 7 dar.

Die Stegflächen 3 sind somit - wie insbesondere aus der Ausführungsform der Fig. 8 bis 12 ersichtlich ist - rechteckig zu den Kanten h und d.

Das Schleifkorn 1 weicht somit von der in Fig. 1 gezeigten idealen Au-ßenform eines Tetraeders mit Mittelpunkt M ab, zeigt aber eine dreizählige Symmetrie, d. h. vier dreizählige Achsen. Die Seitenbereiche 2 sind gegenüber der Tetraederform nach innen zum Mittelpunkt M hin vertieft, wobei die Seitenbereiche 2 durch jeweils drei Hypotenusen 16 begrenzt sind und die Vertiefungen 5 durch jeweils drei Katheten 15 bzw. drei Stegwände 6 definiert werden.

Somit ist jeweils ein Steg 7 mit einer äußeren Stegfläche 3 zwischen zwei Vertiefungen 5 gebildet.

Somit treffen sich Berührungspunkte sämtlicher Katheten 15 der Stege 7 in etwa im Massenschwerpunkt M des Schleifkorns 1.

Abweichend von dieser Ausführungsform sind z. B. auch Ausbildungen mit Stegwänden 6 möglich, die nicht genau parallel verlaufen, so dass keine Stege mit gleichmäßiger Dicke ausgebildet werden, sondern zum Beispiel von ihrer Stegfläche 3 zur Mitte hin etwas dicker werden bzw. nicht-plan oder plan und nicht parallel verlaufen.

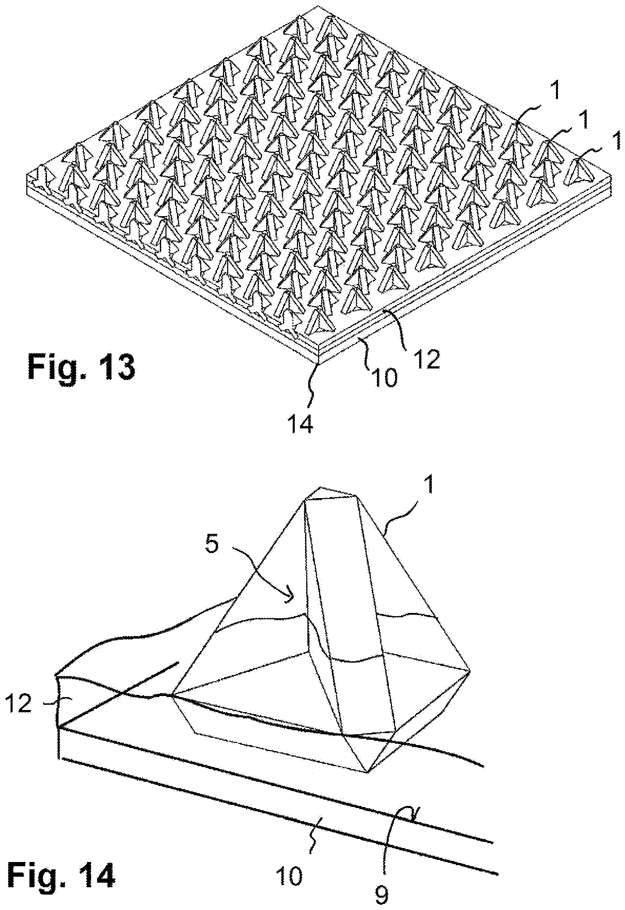

Die Schleifkörner 1 bilden somit einen symmetrischen Körper, der selbsttätig jeweils auf einem Seitenbereich 2, d.h. drei Hypotenusen 16 steht. Dies ist zum Beispiel in Figur 14 detaillierter gezeigt: das Schleifkorn 1 liegt auf einer Oberseite 9 eines z. B. durch ein Gewebe gebildetenTrägers 10. Auf der Oberseite 9 des Trägers 10 ist weiterhin ein Bindermaterial 12 als Vergussmasse aufgebracht, das den unteren Bereich der Schleifkörner 1 bedeckt und einen oberen Bereich frei lässt. Das Bindermaterial 12 härtet aus und ermöglicht somit die Ausbildung eines Schleifartikels 14 gemäß Figur 13, bei dem eine Vielzahl von Schleifkörnern 1 auf einem Träger, z. B. einem Gewebe 10 aufgebracht und in dem Bindermaterial 12 fixiert und gesichert ist. Hierbei ist zum Beispiel aus Figur 13 in den Randbereichen zu sehen, dass der untere Bereich des Schleifkorns 1 von dem Bindermaterial 12 formschlüssig umgeben wird, da der Binder 12 jeweils in die Vertiefungen 5 der Schleifkörner 1 eindringt und hierdurch die Stegwände 6 umgibt, insbesondere an dem unteren, verbreiterten Bereich der Schleifkörner 1.

Weiterhin weist die dreizählige Form des Schleifkorns 1 ein hohes Kipp-Gegenmoment gegenüber Belastungen in jeglichen Richtungen auf, da - wie insbesondere aus den Ansichten der Figur 9 und 11 ersichtlich ist - jedem Kippmoment ein oder zwei Stege 7 entgegen wirken.

Ein Wanddicken-Verhältnis w ist definiert als das Verhältnis der Wanddicke d zur Hypotenusenlänge h, d.h.

$$w = d / h$$

Das Wanddicken-Verhältnis w bestimmt die Stabilität, d.h. insbesondere das Kipp-Gegenmoment, und eine Gesamthöhe G des Schleifkorns 1. Die Ausführungsform der Fig. 6, 7 zeigt Stege 7 mit einem kleinen Wanddicken-Verhältnis w; die bevorzugte Ausführungsform der Fig. 8 bis 12 zeigt Stege 7 mit einem größeren Wanddicken-Verhältnis w, das vorzugsweise im Bereich von 0,05 bis 0,5 liegt.

Die Anordnung der Schleifkörner 1 auf dem Träger 10 können gemäß Figur 13 regelmäßig oder unregelmäßig sein.

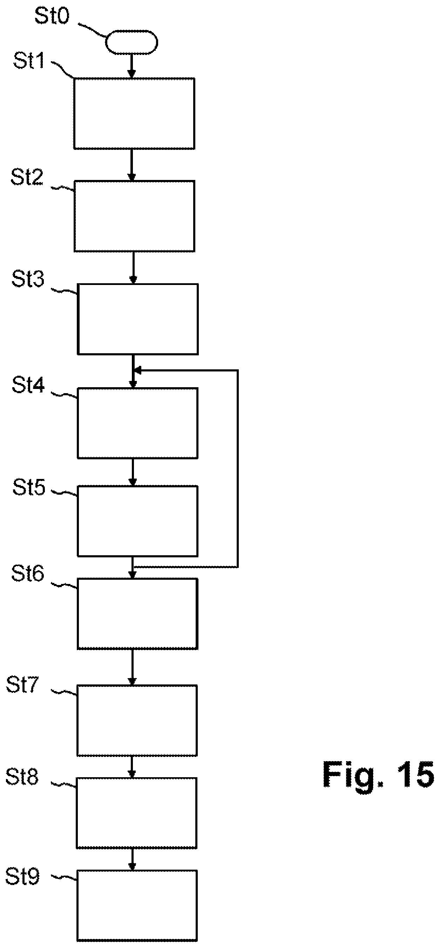

Die Ausbildung der Schleifkörner 1 erfolgt gemäß dem Flussdiagramm der Fig. 15 durch einen Sol-Gel-Prozess mit additiven Aufbringen, auch als "3D Drucken" bezeichnet:

Nach dem Start in St0 wird in Schritt St1 ein Sol ausgebildet, indem zum Beispiel Nano-Partikel von Alumina in einer wässrigen Dispersion, zum Beispiel als Boehmit, aufbereitet werden, z. B. mit Zusätzen (Schritt St1). Aus diesem Sol wird nachfolgend in Schritt St2 ein Gel ausgebildet, in dem gelierende Substanzen, zum Beispiel Salpetersäure, zugefügt werden. Weiterhin wird in Schritt St3 ein optischer Binder zugegeben, der bei Einstrahlung von elektromagnetischer Strahlung einer spezifischen Frequenz, z. B. im UV-Bereich, aushärtet. Ergänzend können (z. B. in Schritt St1 oder St2) $\alpha$-Alumina-Keime, d.h. $\alpha$-Alumina-Einkristalle, für die spätere Kristallit-Ausbildung, zugeführt werden, wie bei Sol-Gel-Prozessen als solches bekannt ist.

Das so ausgebildete Gel wird in Schritt St4 sukzessive schichtweise auf einem Untergrund aufgebracht, wobei nach Aufbringen einer Schicht nachfolgend gemäß Schritt St5 das Gel-Material durch einen Laser der relevanten Frequenz mit geeigneter Fokussierung an den gewünschten Stellen des Material ausgehärtet wird und an weiteren Stellen als nicht-ausgehärtete Masse verbleibt, oder auch entfernt wird. Die Schritte St4 bis St5 können sukzessiv wiederholt werden, bis die Formkörper ausgebildet sind. Die verbleibende Gel-Masse kann nachfolgend in Schritt St6 entfernt werden, oder auch bereits nach jedem Schritt St5 des optischen Aushärtens.

Somit wird ein 3D-Druck bzw. additives Aufbringen oder Ablation aus der Gel-Phase mittels Laser-Aushärten erreicht, bei dem auf einem Untergrund eine Vielzahl von Schleifkörnern 1 aus Gel mit optisch gehärtetem Binder geschaffen werden. Die Schleifkörner 1 können auf dem Untergrund dicht aneinander stehen, das heißt insbesondere dichter als auf dem fertigen Schleifartikel der Figur 14, wobei die Schleifkörner 1 bei der Herstellung z. B. als alternierend auf einer Seitenfläche 2 und auf einer Spitzenfläche 4, das heißt ineinander geschachtelt, aber beabstandet, ausgebildet werden, um auf einem Untergrund eine hohe Anzahl von Schleifkörnern 1 auszubilden.

Nachfolgend werden die so gebildeten Grünlinge, die bereits die gewünschte Form der Schleifkörner 1 aufweisen, einer Wärmebehandlung unterzogen. Die Laserbehandlung hat bereits zu einer Erhitzung geführt, die gegebenenfalls bereits den Schritt des Trocknens erfüllt hat, ansonsten schließen sich zum Beispiel die Schritte an:

- gegebenenfalls weiteres Trocknen in Schritt St7
- Kalzinieren bei etwa 800° Celsius in Schritt St8, wobei der Binder oxidiert,
- Brennen bei ca. 1400° Celsius in Schritt St9.

Die so hergestellten Schleifkörner 1 auf Alumina-Basis werden nachfolgend weiterverarbeitet, zum Beispiel zu den Schleifartikeln 14 gemäß Figur 13.

Bezugszeichenliste (Teil der Beschreibung)

| | |
|---|---|
| 1 | Schleifkorn |
| 2 | Seitenfläche |
| 3 | Stegfläche |
| 4 | Dreieck-förmige Spitzenfläche |
| 5 | Vertiefung |
| 6 | Wand, vorzugsweise Stegwand |
| 7 | Volumenkörper, vorzugsweise Steg |
| | |
| 7a | erster Steg |
| 7b | zweiter Steg |
| 7c | dritter Steg |
| 7d | vierter Steg |
| 7e | fünfter Steg |
| 7f | sechster Steg |
| | |
| 9 | Oberseite |
| 10 | Träger, z. B. Gewebe |
| 12 | Bindermaterial |
| 15 | Kathete |
| 16 | Hypotenuse |
| | |
| M | Mittelpunkt |
| k | Kathetenlänge |
| h | Hypotenusenlänge |
| d | Wanddicke (Schenkellänge der Spitzenfläche 4) |
| | |
| St0 | Start |
| St1 | Schritt Ausbilden eines Sols |
| St2 | Schritt Ausbilden eines Gels |
| St3 | Schritt Zugeben eines optischen Binders |
| St4 | Schritt sukzessive schichtweise Aufbringung auf einem Untergrund |

St5     Schritt Binden/Aushärten des Gel-Materials durch einen Laser

St6     Schritt Entfernen verbleibender Gel-Masse

St7     Schritt Trocknen, kann in St5 bereits erfolgen

St8, St9     Wärmebehandlung der Grünlinge

St8     Schritt Kalzinieren bei etwa 800° Celsius mit Oxidation des Binders

St9     Schritt Brennen bei ca. 1400° Celsius

**Patentansprüche**

1. Schleifkorn (1) auf Alumina -Basis, das sechs planparallele Volumenkörper (7) aufweist, wobei jeder Volumenkörper (7) jeweils zwei zueinander parallele dreieckige Wände (6) und eine Stegfläche (3) aufweist und die dreieckigen Wände (6) jeweils zwei sich in einem mittleren Bereich des Schleifkorns (1) treffende, gleich lange Katheten (15) und eine längere Hypotenuse (16) aufweisen, wobei es eine abgeflachte tetraedrische Außenform mit vier Seitenbereichen (2) jeweils dreieckiger Form aufweist, wobei die sechs Stegflächen (3) zwischen den Seitenbereichen (2) ausgebildet sind und in den Seitenbereichen (2) Vertiefungen (5) ausgebildet sind.

2. Schleifkorn (1) nach Anspruch 1, **dadurch gekennzeichnet, dass** es ausschließlich aus den Volumenkörpern (7) und die Volumenkörper (7) verbindenden oder Überlappungen der Volumenkörper (7) darstellenden Zwischenbereichen gebildet ist.

3. Schleifkorn (1) nach Anspruch 1 oder 2, **dadurch gekennzeichnet, dass** jeweils drei Stegflächen (3) sich in einer Spitzenfläche (4) treffen und das Schleifkorn (1) vier vorzugsweise jeweils plane, dreieckige, gleichschenklige Spitzenflächen (4) aufweist.

4. Schleifkorn (1) nach Anspruch 3, **dadurch gekennzeichnet, dass** die Volumenkörper (7) als planparallele Plättchen oder Stege (7) mit einer gleichmäßigen Wanddicke (d) ausgebildet sind.

5. Schleifkorn (1) nach Anspruch 4, **dadurch gekennzeichnet, dass** ein Wanddicken-Verhältnis (w) definiert ist als das Verhältnis der Wanddicke (d) zur Hypotenusenlänge (h) und in dem Bereich 0,05 bis 0,5 liegt.

6. Schleifkorn (1) nach einem der vorherigen Ansprüche, **dadurch gekennzeichnet, dass** es aus polykristallinem α-Alumina-Material ausgebildet ist.

7. Schleifkorn (1) nach einem der vorherigen Ansprüche, **dadurch gekennzeichnet, dass** es herstellbar ist durch ein Verfahren mit mindestens folgenden Schritten:

Ausbilden eines Sols als Lösung oder Dispersion von Alumina-Partikeln,
Gelieren des Sols durch Zugabe von Geliermitteln,
Ausbilden von Formkörpern aus dem Gel,
Trocknen und Brennen der Formkörper unter Ausbildung geformter Schleifkörner (1),
wobei
dem Sol und/oder dem Gel ein optisch bindender Binder zugeführt wird, und
das Gel schichtweise additiv aufgetragen und zur Formung der Formkörper der Binder mittels elektromagnetischer Strahlung verfestigt wird.

8. Schleifkorn (1) nach Anspruch 7, **dadurch gekennzeichnet, dass** es herstellbar ist durch ein Verfahren mit mindestens folgenden weiteren Schritten:

Auftragen einer Gel-Schicht auf einer Unterlage,
Verfahren eines Lasers als Beleuchtungseinrichtung derartig, dass er in der Gel- Schicht Formkörper durch Aushärten des optischen Binders ausbildet.

9. Schleifkorn (1) nach Anspruch 7 oder 8, **dadurch gekennzeichnet, dass** es herstellbar ist durch ein Verfahren, das mindestens folgende weitere Schritte aufweist:

sukzessives aufeinander Auftragen von Gel-Schichten,
wobei die Beleuchtungseinrichtung in der aufgetragenen Schicht jeweils Bereiche der Formkörper aushärtet.

10. Schleifkorn (1) nach einem der Ansprüche 7 bis 9, **dadurch gekennzeichnet, dass** es herstellbar ist durch ein Verfahren, bei dem das Aushärten des optischen Binders durch elektromagnetische Strahlung einen Teil des Schrittes des Trocknens oder den gesamten Schritt des Trocknens darstellt

11. Schleifartikel (14), der aufweist:

einen Träger (10) mit einer Oberseite (9).
auf der Oberseite (9) des Trägers (10) eine Vielzahl von Schleifkörnern (1) nach einem der vorherigen Ansprüche, und
ein Bindermaterial (12), das auf der Oberseite (9) des Trägers (10) aufgetragen ist und einen unteren Bereich der Schleifkörner (1) umgibt.

**Claims**

1. Alumina-based abrasive particle (1),
having six plane-parallel volume bodies (7),
wherein each volume body (7) has two triangular walls (6) parallel to each other and a ridge face (3) and the triangular walls (6) each have two catheti (15) of equal length which join in a central region of the abrasive particle (1) and a longer hypothenuse (16),
wherein it has a flattened tetrahedral outer shape with four lateral regions (2) each with a triangular shape, wherein the six ridge faces (3) are formed between the lateral regions (2), and recesses (5) are formed in the lateral regions (2).

2. Abrasive particle (1) according to claim 1, **characterised in that** it is formed exclusively from the volume bodies (7) and intermediate regions which connect the volume bodies (7) or constitute overlaps of the volume bodies (7).

3. Abrasive particle (1) according to claim 1 or 2, **characterised in that** three ridge faces (3) join in a top face (4) and the abrasive particle (1) has four, each preferably planar, triangular, isosceles top faces (4).

4. Abrasive particle (1) according to claim 3, **characterised in that** the volume bodies (7) are designed as plane-parallel pads or ridges (7) with a consistent wall thickness (d).

5. Abrasive particle (1) according to claim 4, **characterised in that** a wall thickness ratio (w) is defined as the ratio of the wall thickness (d) to the hypothenuse length (h) and lies in the range of 0.05 and 0.5.

6. Abrasive particle (1) according to any one of the preceding claims, **characterised in that** it is formed from polycrystalline $\alpha$ alumina material.

7. Abrasive particle (1) according to any one of the preceding claims, **characterised in that** it can be produced by a method comprising at least the following steps:

   forming a sol as a solution or dispersion of alumina particles,
   gelling the sol by adding gelling agents,
   forming shaped bodies from the gel,
   drying and firing the shaped bodies while forming shaped abrasive particles (1),
   wherein
   an optically binding binder is added to the sol and/or the gel, and
   the gel is applied additively layer by layer and the binder is set using electromagnetic radiation so as to form the shaped bodies.

8. Abrasive particle (1) according to claim 7, **characterised in that** it can be produced by a method comprising at least the following further steps:

   applying a gel layer to a substrate,
   moving a laser as an illumination device in such a manner that it forms shaped bodies in the gel layer by curing the optical binder.

9. Abrasive particle (1) according to claim 7 or 8, **characterised in that** it can be produced by a method having at least the following further steps:

   successively applying gel layers on top of the other,
   wherein the illumination device cures regions of the shaped bodies in the applied layer.

10. Abrasive particle (1) according to any one of claims 7 to 9, **characterised in that** it can be produced by a method in which the curing of the optical binder by means of electromagnetic radiation constitutes a part of the step of drying or the entire step of drying.

11. Abrasive article (14), having:

   a substrate (10) with an upper side (9),
   on the upper side (9) of the substrate (10), a plurality of abrasive particles (1) according to any one of the preceding claims, and a binder material (12) applied to the upper side (9) of the substrate (10) and surrounding a lower region of the abrasive particles (1).

**Revendications**

1. Grain abrasif (1) à base d'alumine présentant six corps volumique plan-parallèles, chaque corps volumique (7) présentant respectivement deux parois triangulaires (6) parallèles l'une à l'autre et une face de traverse (3) et les parois triangulaires (6) présentant respectivement deux cathètes (15) de longueur identique qui se rencontrent dans une zone centrale du grain abrasif (1) et une hypoténuse (16) plus longue,
le grain abrasif présentant une forme extérieure tétraédrique aplatie avec quatre zones latérales (2) respectivement de forme triangulaire, les six faces de traverse (3) étant formées entre les zones latérales (2) et des évidements (5) étant formés dans les zones latérales (2).

2. Grain abrasif (1) suivant la revendication 1, **caractérisé en ce qu'**il est formé exclusivement par les corps volumiques (7) et les zones intermédiaires reliant les corps volumiques (7) ou constituant des chevauchements des corps volumiques (7).

**3.** Grain abrasif (1) suivant la revendication 1 ou 2, **caractérisé en ce que** respectivement trois faces de traverse (3) se rencontrent en une face en pointe (4) et **en ce que** le grain abrasif (1) présente quatre faces en pointe (4) de préférence planes, triangulaires, isocèles.

**4.** Grain abrasif (1) suivant la revendication 3, **caractérisé en ce que** les corps volumiques (7) sont formés en tant que plaquettes ou traverses (7) plan-parallèles avec une épaisseur de paroi (d) uniforme.

**5.** Grain abrasif (1) suivant la revendication 4, **caractérisé en ce qu'**un rapport d'épaisseur de paroi (w) est défini comme étant le rapport de l'épaisseur de paroi (d) à la longueur de l'hypoténuse (h) et se situe dans la plage de 0,05 à 0,5.

**6.** Grain abrasif (1) suivant une des revendications précédentes, **caractérisé en ce qu'**il est réalisé dans un matériau d'alumine $\alpha$ polycristallin.

**7.** Grain abrasif (1) suivant une des revendications précédentes, **caractérisé en ce qu'**il peut être fabriqué au moyen d'un procédé comportant au moins les étapes suivantes :

formation d'un sol en tant que solution ou dispersion de particules d'alumine,
gélification du sol par ajout d'un gélifiant,
formation de corps moulés à partir du gel,
séchage et combustion des corps moulés en formant des grains abrasifs profilés (1),
un liant à effet de liaison optique étant ajouté au sol et/ou au gel, et
application du gel de façon additive, couche par couche, et durcissement du liant au moyen d'un rayonnement électromagnétique pour la formation des corps moulés.

**8.** Grain abrasif (1) suivant la revendication 7, **caractérisé en ce qu'**il peut être fabriqué au moyen d'un procédé comportant au moins les autres étapes suivantes :

application d'une couche de gel sur un support,
déplacement d'un laser en tant que système d'éclairage de sorte qu'il forme des corps moulés dans la couche de gel par durcissement du liant optique.

**9.** Grain abrasif (1) suivant la revendication 7 ou 8, **caractérisé en ce qu'**il peut être fabriqué au moyen d'un procédé qui comporte au moins les autres étapes suivantes :
application successive des couches de gel les unes sur les autres, le système d'éclairage durcissant respectivement des zones des corps moulés dans la couche appliquée.

**10.** Grain abrasif (1) suivant une des revendications 7 à 9, **caractérisé en ce qu'**il peut être fabriqué au moyen d'un procédé, dans lequel le durcissement du liant optique par rayonnement électromagnétique constitue une partie de l'étape de séchage ou l'ensemble de l'étape de séchage.

**11.** Article abrasif (14) présentant :

un support (10) avec une face supérieure (9),
sur la face supérieure (9) du support (10), une pluralité de grains abrasifs (1) suivant une des revendications précédentes, et
un matériau liant (12) qui est appliqué sur la face supérieure (9) du support (10) et enveloppe une zone inférieure des grains abrasifs (1).

**Fig. 1**

**Fig. 2**

**Fig. 3**

**Fig. 4**

**Fig. 5**

**Fig. 6**

**Fig. 7**

Fig. 8

Fig. 9

Fig. 10

Fig. 11

Fig. 12

**Fig. 13**

1

1

1

12

10

14

**Fig. 14**

1

5

12

10

9

Fig. 15

**IN DER BESCHREIBUNG AUFGEFÜHRTE DOKUMENTE**

**In der Beschreibung aufgeführte Patentdokumente**

- WO 2001139562 A2
- EP 651778 B1
- EP 2251185 A1
- EP 2692818 A1
- WO 2011139562 A2
- EP 2692817 A1
- US 2013125477 A1